# EUROPÄISCHE PATENTANMELDUNG

(11) **EP 4 759 873 A1**
(43) Veröffentlichungstag der Anmeldung: **17.06.2026**
(21) Anmeldenummer: 24219907.3
(22) Anmeldetag: 13.12.2024
(51) Int. Cl.: C08L 23/0884, C08L 25/14, C09D 177/06, C08G 69/26

(54) **POLYAMID-FORMMASSE UND MEHRSCHICHTSTRUKTUR**

(71) Anmelder: EMS-CHEMIE AG, 7013 Domat/Ems (CH)
(72) Erfinder: AEPLI, Etienne, 7013 Domat/EMS (CH)
(74) Vertreter: Pfenning, Meinig & Partner mbB

(57) **Zusammenfassung**

Die vorliegende Erfindung betrifft eine Polyamid-Formmasse, die eine Mischung aus mindestens einem teilkristallinen Polyamid, mindestens einem amorphen Polyamid auf Basis aliphatischer Diamine, mindestens eines vinylaromatischen Blockcopolymers und/oder eines Polyolefins sowie gegebenenfalls Additive in bestimmten Mischungsverhältnissen beinhaltet. Die Polyamid-Formmasse zeichnet sich durch eine hohe chemische und thermische Beständigkeit aus, so dass es sich insbesondere als Ummantelung für metallische Strukturen, wie beispielsweise elektrische Leiter eignet. Zudem betrifft die vorliegende Erfindung eine Schichtstruktur mit wenigstens einem Metallelement und wenigstens einer Polyamidschicht, die aus der erfindungsgemäßen Polyamid-Formmasse gebildet ist. Des Weiteren betrifft die vorliegende Erfindung ein Verfahren zur Herstellung einer Schichtstruktur sowie die Verwendung einer erfindungsgemäßen Polyamid-Formmasse zur Herstellung eines mit einer Polyamidschicht isolierten elektrischen Leiters.

## Beschreibung

### ZUSAMMENFASSUNG DER ERFINDUNG

Die vorliegende Erfindung betrifft eine Polyamid-Formmasse, die eine Mischung aus mindestens einem teilkristallinen Polyamid, mindestens einem amorphen Polyamid auf Basis aliphatischer Diamine, mindestens eines vinylaromatischen Blockcopolymers und/oder eines Polyolefins sowie gegebenenfalls Additive in bestimmten Mischungsverhältnissen beinhaltet. Die Polyamid-Formmasse zeichnet sich durch eine hohe chemische und thermische Beständigkeit aus, so dass es sich insbesondere als Ummantelung für metallische Strukturen, wie beispielsweise elektrische Leiter eignet. Zudem betrifft die vorliegende Erfindung eine Schichtstruktur mit wenigstens einem Metallelement und wenigstens einer Polyamidschicht, die aus der erfindungsgemäßen Polyamid-Formmasse gebildet ist. Des Weiteren betrifft die vorliegende Erfindung ein Verfahren zur Herstellung einer Schichtstruktur sowie die Verwendung einer erfindungsgemäßen Polyamid-Formmasse zur Herstellung eines mit einer Polyamidschicht isolierten elektrischen Leiters.

### STAND DER TECHNIK

Metallische Drähte aus z.B. Kupfer oder Aluminium finden als Leiter z.B. für die Übertragung von Strom oder für Wicklungen breite Anwendung, u.a. in Automobilen, Elektromotoren, Drehstrommotoren und Transformatoren etc.. Die Drähte sind an ihrer Oberfläche mit einer elektrischen Isolationsbeschichtung versehen, um die Leiter zu schützen und zu isolieren, z.B. einzelne Drahtwindungen gegeneinander, um einen Kurzschluss zu verhindern. Zum Schutz vor Beschädigung und zur Isolation werden metallische Leiter also häufig mit Kunststoffschichten überzogen oder lackiert. Die Isolationsschichten sollen eine hohe Kratz- und Haftfestigkeit sowie einen hohen Widerstand gegen Abrieb aufweisen und müssen aber auch ausreichend flexibel sein, d.h. die Beschichtung sollte beim Biegen und entsprechender Dehnung der Drähte im Rahmen der Weiterverarbeitung nicht reissen. Auch bei Kontakt mit Wasser, Salzlösungen und Chemikalien, insbesondere Brennstoffen und Ölen, sollte insbesondere im Automobilbereich eine solche Beschichtung stabil bleiben.

US-A-2004/0028921 betrifft beschichtete Metalloberflächen, insbesondere für Leitungsrohre aus Metall im Automobilbereich für z.B. Bremsflüssigkeiten, wobei das Metall zunächst mit optionalen Primer- oder Haftvermittlerschichten versehen wird, bevor eine Schicht aus einer Mischung aus Polyamid und Carbonsäureanhydrid modifizierten Polyolefinen aufgetragen wird. Das Metall kann Aluminium sein, als Polyamid wird teilkristallines Polyamid wie z.B. PA11 und PA12 sowie weitere aliphatische Polyamide genannt.

EP-A-1 351 000 beschreibt Kraftstoffleitungen aus Stahl, optional mit Aluminium beschichtet, die mittels Extrusion mit einer Schicht aus PA12 versehen werden. US-A-2001/0023537 betrifft durch Extrusion beschichtete Metallartikel, bei denen das Metall zunächst mit einer organischen Silanverbindung und nachfolgend mit einem Polyamid beschichtet wird. Als Polyamide wird eine grosse Auswahl üblicher Polyamide ohne besondere Präferenz genannt.

Ein Beispiel für eine Metallbeschichtung mit Polyamid-Pulvern im Wirbelsinterverfahren wird in DE-T-697 04 007 und in der DE-T-695 26 745 beschrieben. Nach der Beschichtung des Metalls wird das Polyamid-Pulver durch Wärmeeinfluss geschmolzen, so dass ein geschlossener Kunststoffüberzug auf dem Metall entsteht. Beschichtet werden Stahlplatten mit PA11 unter optionaler Verwendung von Füllstoffen.

In DE-A-10 2007 054 004 werden Metallverbunde aus einem metallischen Grundprofil und ein oder zwei teilweise überlappenden Kunststoffprofilen beschrieben. Konkret genannt werden für das Kunststoffelement A die Polyamide PA6 und PA66 und für das Kunststoffelement B das Polyamid PA12.

US-B-6291024 beschreibt beschichtete Metalloberflächen, wobei die Struktur aufeinanderfolgend aus einem Metall, einer Schicht aus thermoplastischem Polyurethan und einer Schicht eines davon verschiedenen Thermoplasten besteht. Optional können Haftvermittlerschichten zum Einsatz kommen. Zur Anwendung kommt eine solche Struktur bei Rohren, Elektro- und Telekommunikationskabeln. Als Thermoplaste werden u.a. Polyamide und Polyolefine genannt.

Sehr ähnlich ist die US-B-6235361. Sie beschreibt einen Aufbau bei dem auf die Metalloberfläche zunächst eine Schicht aus Epoxidharz folgt, auf der dann eine Polypropylen basierte Haftvermittlerschicht und darauf eine Thermoplastschicht folgt. Thermoplast kann u.a. Polyamid sein.

Aus der EP-A-2 746 342 ist die Verwendung einer Polyamid-Formmasse zur Herstellung eines anfärberesistenten Artikels, bei welchem die Anfärbeneigung (AN) wenigstens 2 ist, bekannt. Die Masse enthält dabei 30 - 100 Gew.-% eines Polyamids oder einer Polyamidmischung, bestehend aus 50 - 100 Gew.-% mindestens eines amorphen oder mikrokristallinen Polyamids mit einer Glasübergangstemperatur von wenigstens 100°C, basierend auf einem cycloaliphatischen Diamin sowie aromatischen oder aliphatischen Dicarbonsäuren mit mindestens 6 Kohlenstoffatomen.

Aus der DE 10 2007 003327 ist eine Folie bekannt, die folgende Schichten enthält: I. eine Schicht auf Basis eines Polyamids, dessen Monomereinheiten im Durchschnitt mindestens 8 C-Atome enthalten, II. eine unmittelbar benachbarte Schicht aus einer Formmasse, die ein Polyamid wie unter I. sowie ein Copolymeres enthält, das funktionelle Gruppen besitzt, Die Folie wird zur Herstellung eines Verbundes mit einem Substrat verwendet, das PA6, PA66, PA6/66 oder PPA enthält, wobei eine feste Haftung resultiert.

WO-A-2014170148 beschreibt die Verwendung von thermoplastischen Formmassen, enthaltend ein thermoplastisches Polyamid, roten Phosphor, ein Dialkylphosphinsäuresalz, und ein Ethylencopolymerisat als Schlagzähmodifier zur Herstellung von flammgeschützten, glühdrahtbeständigen Formkörpern.

EP 4 253 479 A1 betrifft eine Polyamid-Formmasse mit hoher Bruchenergie sowie hieraus gebildete Formteile, die sich insbesondere für Sichtteile bei Automobilteilen oder elektronischen Geräten eignet. Die Polyamid-Formmasse weist neben ausgezeichneter Bruchenergie ebenso Klavierlackoptik und hohe Scheuerfestigkeit auf. Die Verwendung als Kabelummantelung wird nicht erwähnt.

EP 3 031 862 A1 betrifft Mehrschichtstrukturen mit mindestens einer Metallschicht und mindestens einer Polyamidschicht, insbesondere zur Verwendung als isolierte elektrische Leiter, sowie die Verwendung von Polyamiden zur Beschichtung von Metallen. Die vorgeschlagene Polyamidschicht besteht aus einer Mischung von cycloaliphatischen Polyamiden und Polyolefinen, der optional kleine Mengen an offenkettigen aliphatischen Polyamiden hinzugesetzt werden können. Kabelummantelungen, wie in den Beispielen beschrieben, können nur bis maximal 130 °C eingesetzt werden, weil oberhalb dieser Temperatur eine zu starke Erweichung der Ummantelung eintritt. Zudem sind solche Ummantelungen nicht gegen Ethanol-haltige Flüssigkeiten beständig.

### DARSTELLUNG DER ERFINDUNG

Nachteilig an den aus dem Stand der Technik bekannten Mehrschichtstrukturen ist allerdings, dass diese nach wie vor eine zu geringe Chemikalien- und Wärme-Beständigkeit aufweisen, um insbesondere in chemisch und thermisch anspruchsvollen Umgebungen eingesetzt werden zu können.

Es ist entsprechend unter anderem Aufgabe der vorliegenden Erfindung eine verbesserte Polyamid-Formmasse, aus der eine Kabelummantelung für einen metallischen Leiter in Form eines Endlosprofils und einer umlaufend und bevorzugt ohne Haftvermittlerschicht auf dem metallischen Leiter angeordneten Polyamidschicht, gefertigt aus der erfindungsgemäßen Polyamid-Formmasse, hergestellt werden kann, zur Verfügung zu stellen. Die Kabelummantelung soll dabei insbesondere eine hohe chemische, thermische und mechanische Beständigkeit aufweisen, insbesondere gegenüber Motoröl, Bremsflüssigkeit, Automatikgetriebeöl, Kühlmittel, Ad Blue, Benzin, Diesel, Ethanol und Aceton. Des Weiteren soll die Kabelummantelung eine ausreichende mechanische Stabilität bis 180 °C aufweisen und der spezifische Durchgangswiderstand soll im Temperaturbereich von 20 bis 180 °C mindestens 1.0E+10 Ohm*m betragen. Weiterhin sollte der spezifische Durchgangswiderstand auch nach 3000 Stunden Lagerung bei 180 °C noch mindestens 1.0E+10 Ohm*m betragen

Diese Aufgabe wird hinsichtlich einer Polyamid-Formmasse mit den Merkmalen des Patentanspruchs 1, mit einer Schichtstruktur gemäß Patentanspruch 9, einem Verfahren zur Herstellung einer Schichtstruktur gemäß Patentanspruch 14 sowie der Verwendung einer erfindungsgemäßen Polyamid-Formmasse gemäß Patentanspruch 15 gelöst. Die abhängigen Patentansprüche stellen dabei vorteilhafte Weiterbildungen dar.

Die vorliegende Erfindung betrifft somit in einem ersten Aspekt eine Polyamid-Formmasse, wobei die Polyamid-Formmasse folgenden Komponenten (A), (B) und (C), sowie gegebenenfalls (D) umfasst oder hieraus besteht:
(A) 40 - 85 Gew.-% mindestens eines teilkristallinen Polyamids ausgewählt aus der Gruppe der Homopolyamide PA46, PA66, PA610, PA612, PA1010, PA1012 sowie der Copolyamide PA 66/6T und PA 66/6I/6T;
(B) 8 - 35 Gew.-% mindestens eines amorphen Polyamids auf Basis aliphatischer Diamine mit 6 bis 24 Kohlenstoffatomen und aliphatischer und/oder aromatischer Dicarbonsäuren mit 6 bis 36 C-Atomen sowie gegebenenfalls Lactame und/oder α,ω-Aminocarbonsäuren;
(C) 7 - 20 Gew.-% mindestens eines, Polyolefins (C1) auf Basis von C2-C12-Alkenen und/oder mindestens eines Blockcopolymeren (C2) auf Basis von vinylaromatischen Monomeren und C2-C5 Alkenen, oder einer Mischung davon, wobei die genannten Alkene in verzweigter oder unverzweigter Form vorliegen können, und
   wobei die vinylaromatischen Blockcopolymere (C2) und/oder die Polyolefine (C1) wenigstens ein zusätzliches Monomer (M) ausgewählt aus der Gruppe bestehend aus Maleinsäureanhydrid, Itaconsäureanhydrid, Glycidylacrylat, Glycidylmethacrylat, Acrylsäure, Methacrylsäure, Vinylacetat, C₁-C₁₂-Alkylacrylate, vorzugsweise Ethylacrylat oder Butylacrylat, C₁-C₁₂-Alkylmethacrylate, oder einer Mischung derartiger Monomere, enthalten und
   wobei diese zusätzlichen Monomere (M) in der Polymerkette angeordnet oder auf die Polymerkette aufgepfropft vorliegen können;
(D) 0 - 5 Gew.-% Additive, verschieden von den Komponenten (A) bis (C),
   mit der Massgabe, dass die Summe der Komponenten (A)-(D) 100 Gew.-% ergibt.

Überraschenderweise wurde festgestellt, dass die oben genannte Polyamid-Formmasse die eingangs genannte Aufgabe löst und eine exzellente Beständigkeit gegenüber Chemikalien und eine hohe Temperaturbeständigkeit aufweist.

Die Begriffe "enthaltend" und "umfassend" in den vorliegenden Ansprüchen und in der Beschreibung bedeuten, dass weitere Komponenten nicht ausgeschlossen sind. Im Rahmen vorliegender Erfindung ist der Begriff "bestehend aus" als bevorzugte Ausführungsform der Begriffe "enthaltend" oder "umfassend" zu verstehen. Wenn definiert wird, dass eine Gruppe mindestens eine bestimmte Anzahl von Komponenten "enthält" oder diese "umfasst", ist dies auch so zu verstehen, dass eine Gruppe offenbart wird, die vorzugsweise aus diesen Komponenten "besteht". Für den Fall, dass die Polyamidformmasse, die genannten Komponenten umfasst, ergänzen sich die Komponenten (A) bis (D) zu 100 Gew.-%, allerdings beinhaltet die Polyamid-Formmasse dann noch weitere von (A) bis (D) verschiedene Komponenten.

Im Sinne der vorliegenden Erfindung wird unter dem Begriff "Polyamid" (Abkürzung PA) ein Oberbegriff verstanden, welcher Homopolyamide und Copolyamide umfasst. Die gewählten Schreibweisen und Abkürzungen für Polyamide und deren Monomere entsprechen den in der ISO-Norm 16396-1 (2015(D)) festgelegten. Die darin verwendeten Abkürzungen werden im folgenden Synonym zu den IUPAC Namen der Monomere verwendet, insbesondere kommen folgende Abkürzungen für Monomere vor: BAC für 5 Bis(aminomethyl)cyclohexan, wobei davon 1,3-Bis(aminomethyl)cyclohexan (1,3-BAC) und 1,4-Bis(aminomethyl)cyclohexan (1,4-BAC) erfasst seien, MACM für Bis(4-amino-3-methylcyclohexyl)methan (auch als 3,3'-Dimethyl-4,4'-diaminodicyclohexylmethan bezeichnet, CAS-Nr. 6864-37-5), PACM für Bis(4-amino-cyclohexyl)methan (auch als 4,4'-Diaminodicyclohexylmethan bezeichnet, CAS-Nr. 1761-71-3), TMDC für Bis(4-amino-3,5-10 dimethyl-cyclohexyl)methan (auch als 3,3',5,5'-Tetramethyl-4,4'-diaminodicyclohexylmethan bezeichnet, CAS-Nr. 65962-45-0), T für Terephthalsäure (CAS-Nr. 100-21-0), I für Isophthalsäure (CAS-Nr. 121-95-5).

Amorphe Polyamide weisen verglichen mit den teilkristallinen Polyamiden keine oder nur eine sehr geringe, kaum nachweisbare Schmelzwärme, auf. Die amorphen Polyamide zeigen in der dynamischen Differenz-Kalorimetrie (engl. Differential Scanning Calorimetry, DSC) nach ISO 11357 (2013) bei einer Aufheizrate von 20 K/min bevorzugt eine Schmelzwärme von maximal 5 J/g, besonders bevorzugt von maximal 3 J/g, ganz besonders bevorzugt von 0 bis 1 J/g. Amorphe Polyamide besitzen auf Grund ihrer Amorphizität keinen Schmelzpunkt.

Im Sinne der Erfindung sind teilkristalline Polyamide solche Polyamide, die in der dynamischen Differenz-Kalorimetrie (engl. Differential Scanning Calorimetry, DSC) nach ISO 11357 (2013) bei einer Aufheizrate von 20 K/min bevorzugt eine Schmelzwärme von mehr als 5 J/g, besonders bevorzugt von wenigstens 25 J/g, ganz besonders bevorzugt von wenigstens 30 J/g aufweisen.

### Komponente (A)

Das Polyamid der Komponente (A) ist hierbei ein spezifisches teilkristallines Polyamid ausgewählt aus der Gruppe der Homopolyamide PA46, PA66, PA610, PA612, PA1010, PA1012 sowie der Copolyamide PA 66/6T und PA 66/6I/6T, sowie Mischungen hieraus.

Bei den Copolyamiden beträgt der Anteil der 6T Wiederholungseinheiten bevorzugt 20 bis 50 mol-% und besonders bevorzugt 25 bis 45 mol-%, jeweils bezogen auf die Summe der mol-% aller im Copolyamid vorhandenen Wiederholungseinheiten. Vorzugsweise haben die Copolyamide (A) einen Schmelzpunkt im Bereich von 220°C bis 280 °C.

Ganz besonders bevorzugt ist das Komponente (A) ein Polyamid ausgewählt aus PA66, PA610, PA612 oder eine Mischung hiervon.

### Komponente (B)

Vorzugsweise besteht Komponente (B) aus Polyamiden, die eine Glasübergangstemperatur von wenigstens 140 °C oder weiterhin vorzugsweise 150°C aufweisen, dabei aber bevorzugt eine Glasübergangstemperatur von nicht mehr als 220°C oder nicht mehr als 200°C besitzen. Insbesondere bevorzugt werden Polyamide der Komponente (B), deren Glasübergangstemperatur, bestimmt bei einer Gleichgewichtsfeuchte erreicht nach Konditionierung gemäss ISO 1110 (Lagerung der Proben für 14 Tage bei 70 °C und 62 % relativer Feuchte), wenigstens 85°C, bevorzugt wenigstens 90°C und besonders bevorzugt wenigstens 100°C beträgt. Dies ist insbesondere deshalb von Vorteil, weil die Verwendung solcher Polyamide (B), deren Glasübergangstemperatur bei Kontakt mit Wasser nicht unter die angegebenen Temperaturgrenzen fallen, die oben erwähnten, nachteiligen elektrochemischen Vorgänge weitgehend unterdrücken können und somit im Test "Elektrische Eigenschaften bei Wasserlagerung" die Haftung zwischen Metallelement und Polyamidschicht erhalten sowie die Degradation der Polyamidschicht minimiert wird. Die Glasübergangstemperatur wird dabei anhand der ISO-Norm 11357-11-2 am Granulat bestimmt. Die Differential Scanning Calorimetry (DSC) wird dabei mit Aufheizrate von 20 °C/min durchgeführt. Für die Glasumwandlungstemperatur (Tg) wird die Temperatur für die Mittelstufe bzw. den Wendepunkt angegeben.

Bei Komponente (B) handelt es sich um amorphe Polyamide auf Basis aliphatischer Diamine mit 6 bis 24, bevorzugt 6 bis 17 Kohlenstoffatomen und aliphatischer und/oder aromatischer Dicarbonsäuren mit 6 bis 36, bevorzugt mit 8 bis 12 Kohlenstoffatomen. Dabei bedeutet der Begriff aliphatisch in Bezug auf die Diamine oder Dicarbonsäuren, dass cyclische oder acyclische, gesättigte oder ungesättigte Kohlenstoff-Struktureinheiten vorliegen, die keine aromatischen Struktureinheiten umfassen. D.h. aliphatische Diamine umfassen sowohl cycloaliphatische Diamine als auch offenkettige Diamine, aliphatische Dicarbonsäuren umfassen sowohl cycloaliphatische als auch offenkettige aliphatische Dicarbonsäuren.

In Bezug auf Komponente (B) geeignete cycloaliphatische Diamine sind z.B. Bis-(4-amino-3-methyl-cyclohexyl)-methan (MACM), Bis-(4-amino-cyclohexyl)-methan (PACM), Bis-(4-Amino-3-ethyl-cyclohexyl)-methan (EACM), Bis-(4-Amino-3,5-dimethyl-cyclohexyl)-methan (TMDC), 2,6-Norbornandiamin oder 2,6-Bis-(aminomethyl)-norbornan oder 1,3-Diaminocyclohexan, 1,4-Diaminocyclohexandiamin, Isophorondiamin, 1,3-Bis-(aminomethyl)cyclohexan (BAC), 1,4-Bis-(aminomethyl)cyclohexan, 2,2-(4,4'-Diaminodicyclohexyl)propan (PACP) oder Mischungen davon. Insbesondere wird alkylsubstituiertes Bis-(aminocyclohexyl)methan oder Bis-(aminocyclohexyl)propan bevorzugt. Als Alkylsubstituenten werden lineare und/oder verzweigte C1-C6, bevorzugt C1-C4 Alkylgruppen bevorzugt, so insbesondere Methyl-, Ethyl-, Propyl-, Isopropyl- oder Butyl-Gruppen, insbesondere bevorzugt sind Methylgruppen. In einer besonders bevorzugten Ausführungsform werden als alkylsubstituiertes Bis-(aminocyclohexyl)methan das Bis-(4-amino-3-methyl-cyclohexyl)-methan (MACM) und das Bis-(4-Amino-3,5-dimethyl-cyclohexyl)-methan (TMDC) eingesetzt. Besonders bevorzugt werden die cycloaliphatischen Diamine BAC, PACM, MACM und TMDC.

Ebenso geeignet sind offenkettige (acyclische), verzweigte oder unverzweigte aliphatische Diamine, wie z.B. 1,4-Butandiamin, 1,5-Pentandiamin, 2-Methyl-1,5-pentandiamin, 2-Butyl-2-ethyl-1,5-pentandiamin, 1,6-Hexandiamin, 2,2,4-Trimethylhexamethylendiamin, 2,4,4-Trimethylhexamethylendiamin, 1,8-Octandiamin, 2-Methyl-1,8-octandiamin, 1,9-Nonandiamin, 1,10-Decandiamin, 1,11-Undecandiamin, 1,12-Dodecandiamin, 1,13-Tridecandiamin und 1,14-Tetradecandiamin.

Insbesondere bevorzugt werden unverzweigte offenkettige aliphatische Diamine mit 6-12 Kohlenstoffatomen, insbesondere 1,6-Hexandiamin, 1,10-Decandiamin und 1,12-Dodecandiamin.

Für das Polyamid (B) geeignete Dicarbonsäuren sind: Adipinsäure, Korksäure, Azelainsäure, Sebazinsäure, Undecandisäure, Dodecandisäure, Tridecandisäure, Tetradecandisäure, Pentadecandisäure, Hexadecandisäure, Heptadecandisäure, Oktadecandisäure, C36-Dimerfettsäure, Isophthalsäure, Terephthalsäure, Naphthalindicarbonsäure, cis- und/oder trans-Cyclohexan-1,4-dicarbonsäure und/oder cis- und/oder trans-Cyolohexan-1,3-dicarbonsäure (CHDA) und Gemische daraus. Bevorzugt werden aromatische Dicarbonsäuren und geradkettige aliphatische Dicarbonsäuren. Insbesondere bevorzugt werden die Dicarbonsäuren Terephthalsäure, Isophthalsäure, Sebazinsäure sowie Dodecandisäure. Besonders bevorzugt wird ein Polyamid (B), dessen Anteil an Terephthalsäure höchstens 50 mol-%, bezogen auf die Summe aller Dicarbonsäuren von Komponente (B), beträgt. Insbesondere ist es bevorzugt, wenn der Anteil der Terephthalsäure in Komponente (B) kleiner 45 mol-% ist oder keine Terephthalsäure in Komponenten (B) enthalten ist.

Die Polyamide (B) können als weitere Monomere auch Lactame oder Aminocarbonsäuren enthalten, insbesondere α,ω-Aminosäuren oder Lactame mit 6 bis 12 Kohlenstoffatome, wobei beispielhaft nachfolgende Auswahl genannt sei: m-Aminobenzoesäure, p-Aminobenzoesäure, Caprolactam (CL), α,ω-Aminocapronsäure, α,ω-Aminoheptansäure, α,ω-Aminoctansäure, α,ω-Aminonon-ansäure, α,ω-Aminodecansäure, α,ω-Aminoundecansäure (AUA), Laurinlactam (LL) und α,ω-Aminododecansäure (ADA). Besonderes bevorzugt sind Caprolactam, α,ω-Aminocapronsäure, Laurinlactam, α,ω-Aminoundecansäure und α,ω-Aminododecansäure. Der Anteil an Lactamen oder Aminosäuren in Komponente (B) beträgt 0 bis 50 mol-%, bevorzugt 2 - 45 mol-% und besonders bevorzugt 3 bis 35 mol-%, jeweils bezogen auf die Summe aller Komponente (B) bildender Monomere.

Ganz besonders bevorzugt ist das Polyamid (B) ausgewählt aus der Gruppe bestehend aus PA 6I/6T, PA MACM10, PA MACM12, PA MACM14, PA MACM10/1010, PA MACM12/1012, PA MACM14/1014, PA MACMI/12, PA MACMI/MACM12, PA MACMI/MACMT/MACM12, PA MACMI/MACMT/12, PA MACMI/MACMT/MACM12/MACM36, PA 6I/6T/MACMI/MACMT/PACMI/- PACMT/12, PA 6I/6T/612/MACMI/MACMT/MACM12 und Mischungen daraus.

### Komponente (C)

Als Komponente (C) beinhaltet die erfindungsgemässe Polyamid-Formmasse mindestens ein Polyolefin (C1) auf Basis von C2-C12 Alkenen in verzweigter oder unverzweigter Form und/oder ein vinylaromatisches Blockcopolymer (C2) auf Basis eines vinylaromatischen Monomers und C2-C5 Alkenen, oder einer Mischung davon.

Unter dem Begriff der Alkene werden aliphatische, aus Kohlenstoff und Wasserstoff aufgebaute Kohlenwasserstoffe verstanden, die an beliebiger Position mindestens eine Kohlenstoff-Kohlenstoff-Doppelbindung im Molekül besitzen. Eingeschlossen sind damit auch Polyene wie Diene und Triene, nicht aber eingeschlossen in den Begriff der Alkene sind aromatische Kohlenwasserstoff-Systeme, d.h. Ringsysteme mit nach der Hückel-Regel konjugierten Doppel-bindungen.

Die Polymere (C1) und (C2) enthalten zusätzlich zu den oben genannten Monomeren noch wenigstens ein zusätzliches Monomer (M).

Das zusätzliche Monomer (M) kann ausgewählt sein aus der folgenden Gruppe: Maleinsäureanhydrid, Itaconsäureanhydrid, Glycidylacrylat, Glycidylmethacrylat, Acrylsäure, Methacrylsäure, Vinylacetat, C1-C12-Alkylacrylate, vorzugsweise Ethylacrylat oder Butylacrylat, C1-C12-Alkylmethacrylate oder einer Mischung derartiger Monomere. Das zusätzliche Monomer (M) kann dabei entweder in die Hauptkette der Polymere (C1) und (C2), oder in deren Seitenketten, beispielsweise über eine Pfropfreaktion, eingebaut sein.

Die Komponente (C) kann entsprechend auch noch weitere Monomer-Bausteine aufweisen, wiederum entweder in der Hauptkette oder über eine Propfreaktion angebunden.

Insbesondere liegt bei Komponente (C1) der Anteil an C₂-C₁₂ Alkenen im Bereich von 50 bis 95 Gew.%, vorzugsweise im Bereich von 60 bis 94 Gew.-%, und besonders bevorzugt im Bereich von 65 - 93 Gew.-%, oder 70 bis 93 Gew.-%.

Bei Komponente (C2) liegt der Anteil an C2-C5 Alkenen bevorzugt im Bereich von 40 bis 80 Gew.% und besonders bevorzugt im Bereich von 50 bis 75 Gew.-%, der Anteil an vinylaromatischen Monomeren liegt bevorzugt im Bereich von 20 bis 60 Gew.-% und besonders bevorzugt im Bereich von 25 bis 50 Gew.-%.

Werden die Monomere (M) in die Polymerkette einpolymerisiert, liegt der Anteil von (M) in Komponente (C) vorzugsweise im Bereich von 5 bis 50 Gew.-%, besonders bevorzugt im Bereich von 6 - 40 Gew.-%. Werden die Monomere (M) auf die Polymerkette aufgepfropft beträgt der Anteil von (M) vorzugsweise 0.1 bis 5 Gew.-%, besonders bevorzugt 0.2 bis 4 Gew.-%.

Das mindestens eine Polyolefin (C1) basiert bevorzugt auf C2-C8 Alkenen, besonders bevorzugt auf C2-C5 Alkenen, in verzweigter oder unverzweigter Form oder einer Mischung davon, und zusätzlich wenigstens einem Monomer (M) ausgewählt aus der oben genannten Gruppe.

Gemäss einer bevorzugten Ausführungsform ist die Komponente (C1) ausschliesslich aufgebaut aus C2-C12, bevorzugt C2-C8, besonders bevorzugt C2-C5 Alkenen, in verzweigter oder unverzweigter Form oder einer Mischung davon, und zusätzlich wenigstens einem Monomer (M) ausgewählt aus der Gruppe: Maleinsäureanhydrid, Itaconsäureanhydrid, Glycidylacrylat, Glycidylmethacrylat, Acrylsäure, Methacrylsäure, Vinylacetat, C1-C12-Alkylacrylate, C₁-C₁₂-Alkylmethacrylate, oder einer Mischung derartiger Monomere, wobei vorzugsweise das Monomer (M) ausgewählt ist aus der folgenden Gruppe: Maleinsäureanhydrid, Glycidylacrylat, Glycidylmethacrylat, Acrylsäure, Methacrylsäure, Vinylacetat, C1-C12-Alkylacrylate.

Wenn die Komponente (C1) ausschliesslich aufgebaut ist aus C2-C5-Alkenen und Komponente (C2) ausschliesslich aufgebaut ist aus vinylaromatischen Monomeren und C2-C5-Alkenen, dann bevorzugter Massen in Kombination mit zusätzlich wenigstens einem Monomer (M) ausgewählt aus der folgenden reduzierten Gruppe: Maleinsäureanhydrid, Glycidylacrylat, Glycidylmethacrylat, Acrylsäure, Methacrylsäure, Vinylacetat, Ethylacrylat, Butylacrylat oder eine Mischung davon. Gemäss einer weiteren bevorzugten Ausführungsform ist die Komponente (C1) dann ausschliesslich aufgebaut aus Alkenen ausgewählt aus der folgenden Gruppe: Ethen, Propen, 1-Buten, 2-Buten, 1-Penten, 2-Penten, und zusätzlich wenigstens einem Monomer (M) ausgewählt aus der oben angegebenen reduzierten Gruppe und/oder die Komponente (C2) dann ausschliesslich aufgebaut aus Alkenen ausgewählt aus der folgenden Gruppe: Ethen, Propen, 1-Buten, 2-Buten, 1-Penten, 2-Penten, sowie Styrol als vinylaromatisches Monomer und zusätzlich wenigstens einem Monomer (M) ausgewählt aus der oben angegebenen reduzierten Gruppe.

Die Komponente (C1) kann auch Polymere umfassen, die Carbonsäure-, Carbonsäureanhydrid- oder Epoxygruppen in der Seitenkette tragen. Bevorzugt werden solche Polymere (Copolymere oder Pfropfcopolymere), aufgebaut aus Carbonsäure-, oder Carbonsäureanhydridgruppen oder Epoxygruppen enthaltenden Monomeren (M) und mindestens einem Alken-Monomeren, wobei beide Gruppen von Monomeren mindestens eine polymerisierbare Kohlenstoff-Kohlenstoff-Doppelbindung enthalten. Bevorzugte Epoxygruppen-enthaltende Monomere sind Glycidylacrylat und Glycidylmethacrylat. Bevorzugte Carbonsäuregruppen-enthaltende Monomere sind Acrylsäure und Methacrylsäure. Bevorzugte Carbonsäureanhydridgruppen-enthaltende Monomere sind Maleinsäureanhydrid und Itaconsäureanhydrid.

Als Komponente (C1) können weiter Copolymere aus Glycidylacrylat und/oder Glycidylmethacrylat und mindestens einem weiteren ungesättigten C2-C12-AI-ken-Monomeren, das wenigstens eine nicht-aromatische Kohlenstoff-Kohlenstoff-Doppelbindung enthält, eingesetzt werden. Bevorzugtermassen ist Komponente (C1) ein Copolymer aus Glycidylacrylat und/oder Glycidylmethacrylat und mindestens einem weiteren olefinisch ungesättigten Alken-Monomeren, wobei die Konzentration von Glycidylacrylat und Glycidylmethacrylat im Bereich von 5 bis 20 Gew.-%, bevorzugt im Bereich von 6 bis 16 Gew.-% und besonders bevorzugt im Bereich von 7 bis 14 Gew.-% bezogen auf das Copolymer liegt. Ist weniger als 5 Gew.-% Glycidylacrylat oder Glycidylmethacrylat im Copolymer enthalten, ist die Reaktivität von Komponente (C1) in der Regel zu gering und es resultieren nicht die gewünschten mechanischen Eigenschaften. Übersteigt die Glycidylacrylat- oder Glycidylmethacrylat-Konzentration der Komponente (C1) eine Konzentration von 20 Gew.-%, wird die Verarbeitbarkeit, die Oberflächengüte und die mechanischen Eigenschaften in der Regel zunehmend schlechter.

Weiterhin wird bevorzugt, wenn das olefinisch ungesättigte Alken-Monomer ein einfach ungesättigtes Olefin, bevorzugt ein α-Olefin, mit 2 bis 8, insbesondere mit 2 bis 5 Kohlenstoffatomen ist. Insbesondere enthält das Copolymer (C1) neben Glycidylacrylat und/oder Glycidylmethacrylat mindestens ein weiteres olefinisch ungesättigtes Alken-Monomer ausgewählt aus der Gruppe bestehend aus Ethen, Propen, 1-Buten, 2-Buten, 1-Penten, 2-Penten, oder eine Mischung davon. Als Dienmonomere im Sinne der Alken-Monomere kommen z.B. 1,3-Butadien, 2-Methyl-1,3-butadien, 2,3-Dimethyl-1,3-butadien, 1,3-Pentadien, Isopren in Frage. 1,3-Butadien und Isopren sind bevorzugt, insbesondere 1,3-Butadien (nachfolgend kurz als Butadien bezeichnet). Ebenfalls möglich sind Systeme auf Basis von Mischungen von solchen Dien-Monomeren mit Alkenen mit nur einer Doppelbindung.

Besonders bevorzugt ist die Komponente (C1) ein Copolymer aus Glycidylmethacrylat und Ethen sowie gegebenenfalls weiteren olefinisch ungesättigten Alken-Monomeren, wobei bevorzugter Massen der Gehalt an Ethen im Bereich von 50 bis 95 Gew.-%, bevorzugt im Bereich von 60 bis 94 Gew.-% und besonders bevorzugt im Bereich von 65 - 93 Gew.-% oder 70 - 93 Gew.-% liegt.

Konkrete Beispiele sind Copolymere (C1) aus Ethylen und Glycidylacrylat; Ethylen und Glycidylmethacrylat; Ethylen, Methylmethacrylat und Glycidylmethacrylat; Ethylen, Methylacrylat und Glycidylmethacrylat; Ethylen, Ethylacrylat und Glycidylmethacrylat; Ethylen, Butylacrylat und Glycidylmethacrylat; Ethylen, Vinylacetat und Glycidylmethacrylat.

Besonders bevorzugt werden folgende Copolymere für die Komponente (C):
- Polyolefine (C1) aus Ethylen und Glycidylmethacrylat, vorzugsweise mit einem Gehalt an Glycidylmethacrylat von 7 bis 14 Gew.-% bezogen auf die Summe aller Monomere im Copolymer;
- Polyolefine (C1) aus Ethylen, Vinylacetat, sowie Glycidylmethacrylat, vorzugsweise 71 - 88 Gew.-% Ethylen, 5 - 15 Gew.-% Vinylacetat und 7 - 14 Gew.-% Glycidylmethacrylat bezogen auf die Summe aller Monomere im Copolymer;
- Polyolefine (C1) aus Ethylen, Methylacrylat, und Glycidylmethacrylat, vorzugsweise 56 - 73 Gew.-% Ethylen, 20 - 30 Gew.-% Methylacrylat und 7 - 14 Gew.-% Glycidylmethacrylat bezogen auf die Summe aller Monomere im Copolymer;
- Polyolefine (C1) aus Ethylen, Butylacrylat, Glycidylmethacrylat, vorzugsweise 51 - 78 Gew.-% Ethylen, 15 - 35 Gew.-% Butylacrylat und 7 - 14 Gew.-% Glycidylmethacrylat bezogen auf die Summe aller Monomere im Copolymer;
- Blockcopolymer (C2) aus 20 bis 60 Gew.-% Styrol, 40 bis 80 Gew.-% Ethylen und Butylen, gepfropft mit 0.5 bis 4 Gew.-% Maleinsäureanhydrid;
- oder eine Mischung aus solchen Polyolefinen (C1) und Blockcopolymeren (C2).

Generell gesprochen handelt es sich also bevorzugtermassen bei Komponente (C1) um ein Copolymer aus Glycidylacrylat und/oder Glycidylmethacrylat und mindestens einem weiteren ungesättigten Alken-Monomeren mit wenigstens einer Kohlenstoff-Kohlenstoff-Doppelbindung, wobei die Konzentration von Glycidylacrylat, Glycidylmethacrylat oder der Mischung davon bevorzugtermassen im Bereich von 5 bis 15 Gew.-%, bevorzugt im Bereich von 7 bis 14 Gew.-%, bezogen auf die Summe aller Monomere im Copolymer, liegt. Das weitere ungesättigte Monomer kann dabei ein einfach ungesättigtes Olefin sein, bevorzugt ein α-Olefin, mit 2 bis 5 Kohlenstoffatomen.

Gemäss einer ganz bevorzugten Ausführungsform handelt es sich bei Komponente (C1) um ein Copolymer aus Glycidylmethacrylat und Ethen sowie gegebenenfalls weiteren olefinisch ungesättigten Alken-Monomeren, wobei der Gehalt an Alken, vorzugsweise Ethen, im Bereich von 50 bis 95 Gew.-%, bevorzugt im Bereich von 60 bis 94 Gew.-% liegt.

Vorzugsweise liegt bei Komponente (C) der Schmelze-Massefliessrate (melt flow rate, MFR) bestimmt nach ISO 1133 bei 190°C und einer Auflage von 2.16 kg im Bereich von 2-20 g/10 min, bevorzugtermassen im Bereich von 3-15 g/10 min.

Besonders bevorzugte Beispiele für erfindungsgemäss einsetzbare Komponenten (C1) die von Arkema unter dem Produktnamen Lotader AX erhältlichen Systeme, insbesondere vom Typ (AX8840 Copolymer aus 92% Ethen und 8% Glycidylmethacrylat) oder vom Typ AX8900 (Copolymer aus 67% Ethen, 25% Methylacrylat und 8% Glycidylmethacrylat). Ebenfalls bevorzugt sind Produkte vom Typ Elvaloy von Dupont, insbesondere Elvaloy PTW (Copolymer aus 67% Ethen, 28% Butylacrylat und 5% Glycidylmethacrylat), sowie Produkte vom Typ Igetabond erhältlich von Sumitomo, insbesondere Igetabond E (Copolymer aus 88% Ethen und 12% Glycidylmethacrylat).

Bei Komponente (C) handelt es sich weiterhin bevorzugt um Copolymere oder Pfropfcopolymere, die ungesättigte Carbonsäuren, Dicarbonsäuren oder Carbonsäureanhydride als Monomer enthalten, d.h. dass entweder diese Carbonsäuren, Dicarbonsäuren oder Carbonsäureanhydride mit weiteren Comonomeren zum Copolymer (C) polymerisiert oder dass eine Pfropfgrundlage auf Basis anderer Monomere durch Pfropfung mit ungesättigten Carbonsäuren, Dicarbonsäuren oder Carbonsäureanhydriden modifiziert wurde.

Weitere Beispiele für solche Copolymere oder Pfropfcopolymere, die als Bestandteil der Komponente (C) Einsatz finden können oder Komponente (C) als Ganzes bilden, sind ein Polybutadien, Polyisopren, Polyisobutylen, ein Mischpolymerisat des Butadiens und/oder Isoprens mit Styrol oder Styrolderivaten und anderen Comonomeren, ein hydriertes Mischpolymerisat und oder ein Mischpolymerisat, das durch Pfropfen oder Copolymerisation mit Säureanhydriden, (Meth)acrylsäure und deren Ester entstanden ist. Das der Komponente (C) zugrundeliegende Copolymer kann auch ein Pfropfkautschuk mit einem vernetzten elastomeren Kern, der aus Butadien, oder Isopren besteht und eine Pfropfhülle aus Polystyrol hat, ein unpolares oder polares Olefinhomo- und Copolymeres wie Ethylen-Propylen-, Ethylen-Propylen-Dien-Kautschuk oder ein unpolares oder polares Olefinhomo- und Copolymeres, das durch Pfropfen oder Copolymerisation mit Säureanhydriden, (Meth)acrylsäure und deren Ester entstanden ist, sein. Das Copolymer kann auch ein carbonsäure-funktionalisiertes Copolymeres wie Poly(ethen-co-(meth)acrylsäure) oder Poly(ethen-co-1-olefin-co-(meth)acrylsäure) sein, wobei das 1-Olefin ein Alken oder ein ungesättigter (Meth)acrylsäureester mit mehr als 4 C-Atomen ist, einschliesslich solchen Copolymeren, in denen die Säuregruppen teilweise mit Metallionen neutralisiert sind.

Bevorzugte Copolymere (C2) auf Basis von alkenylaromatischen Monomeren (Styrol und Styrolderivate) und C2-C5-Aklken sind Blockcopolymere aufgebaut aus alkenylaromatischen Verbindungen und einem C2-C5-Alken, vorzugsweise konjungierten Dien, sowie hydrierte Blockcopolymere aus der alkenylaromatischen Verbindung und Alkenen, vorzugsweise konjungierten Dienen, oder Kombinationen dieser Blockcopolymer-Typen. Das Blockcopolymer enthält mindestens einen Block abgeleitet von der alkenylaromatischen Verbindung und wenigstens einem Block abgeleitet von einem C2-C5-Alken, vorzugsweise konjungierten Dien. Bei den hydrierten Blockcopolymeren wurde der Anteil an aliphatisch ungesättigten Kohlenstoff-Kohlenstoff-Doppelbindungen durch Hydrierung reduziert. Als Blockcopolymere sind Zwei-, Drei-, Vier- und Polyblockcopolymere mit linearer Struktur geeignet. Jedoch sind verzweigte und sternförmige Strukturen ebenfalls erfindungsgemäss einsetzbar. Verzweigte Blockcopolymere erhält man in bekannter Weise, z.B. durch Pfropfreaktionen von polymeren "Seitenästen" auf eine Polymer-Hauptkette.

Als alkenylaromatische Monomere können neben oder in Mischung mit Styrol, auch vinylaromatische Monomere verwendet werden, die am aromatischen Ring und/oder an der C=C-Doppelbindung mit C1-20 oder C1-C10-Kohlenwasserstoffresten oder Halogenatomen substituiert sind.

Beispiele für alkenylaromatische Monomere unter dem Begriff substituiertes oder unsubstituiertes Styrol sind vorzugsweise unsubstituiertes Styrol, p-Methylstyrol, α-Methylstyrol, Ethylstyrol, tert.-Butylstyrol, Bromstyrole, Chlorstyrole, sowie Kombinationen davon. Bevorzugt werden unsubstituiertes Styrol, p-Methylstyrol, alpha-Methylstyrol, Ethylstyrol, tert.-Butylstyrol, oder deren Mischungen. Besonders bevorzugt wird Styrol eingesetzt.

Bevorzugt verwendet man als alkenylaromatisches Monomer Styrol und als Alken, vorzugsweise Dienmonomer, Butadien, d.h. bevorzugt ist das Styrol-Butadien-Blockcopolymer. In der Regel werden die Blockcopolymere durch anionische Polymerisation in an sich bekannter Weise hergestellt.

Weiterhin kann man zusätzlich zu den Styrol- und Dienmonomeren weitere Comonomere mitverwenden. Der Anteil der Comonomeren beträgt bevorzugt 0 bis 50, besonders bevorzugt 0 bis 30 und insbesondere 0 bis 15 Gew.-%, bezogen auf die Gesamtmenge der eingesetzten Monomeren. Geeignete Comonomere sind z.B. Acrylate, insbesondere C1-12-Alkylacrylate wie n-Butylacrylat oder 2-Ethylhexylacrylat, und die entsprechenden Methacrylate, insbesondere C1-12-Alkylmethacrylate wie Methylmethacrylat (MMA). Weitere mögliche Comonomere sind (Meth)acrylnitril, Glycidyl(meth)acrylat, Vinylmethylether, Dially- und Divinylether bifunktioneller Alkohole, Divinylbenzol und Vinylacetat. C1-12-Alkylacrylate und C1-12-Alkylmethacrylate werden zusammengefasst als C1-12-Alkyl(meth)acrylate benannt.

Zusätzlich zum konjugierten Dien enthalten die hydrierten Blockcopolymere (C2) gegebenenfalls noch Anteile an niederen Kohlenwasserstoffen wie z.B. Ethylen, Propylen, 1-Buten, Dicyclopentadien oder nicht-konjugierte Diene. In den hydrierten Blockcopolymeren ist der Anteil der nicht reduzierten aliphatischen ungesättigten Bindungen, kleiner 50%, bevorzugt kleiner 25%, insbesondere kleiner 10%. Die aromatischen Anteile werden maximal zu 25% reduziert. Die hydrierten Blockcopolymere Styrol-(ethylen-butylen)- oder Styrol-(ethylen-proplyen)-Zweiblock und Styrol-(ethylen-butylen)-styrol-Dreiblock-Copolymere werden durch Hydrierung von Styrol-butadien- und Styrol-butadien-styrol-Copolymeren erhalten.

Die Blockcopolymere (C2) bestehen bevorzugt zu 20 bis 60 Gew.-% aus aromatischem Block, insbesondere zu 25 bis 55 Gew.-% aus aromatischem Block. Das Dien kann in 1,2- oder in 1,4-Orientierungen in den Anteil aus konjugiertem Dien eingebaut werden.

Die Molmasse der Komponente (C) beträgt vorzugsweise 5'000 bis 500'000 g/mol, besonders bevorzugt 20'000 bis 300'000 g/mol und insbesondere bevorzugt 40'000 bis 200'000 g/mol.

Geeignete hydrierte Blockcopolymere sind die kommerziell erhältlichen Produkte, wie z.B. KRATON^{®} (Kraton Polymers) G1650, G1651, G1652 und FG1901GT sowie TUFTEC^{®} (Asahi Chemical) H1041, H1043, H1052, H1062, H1141 und H1272.

Beispiele für nicht-hydrierte Blockcopolymere sind Polystyrol-polybutadien, Polystyrol-poly(ethyen-propylen), Polystyrol-polyisopren, Poly(α-methyl-styrol)-polybutadien, Polystyrol-polybutadien-polystyrol (SBS), Polystyrol-Poly(ethylene-propylen)-polystyrol, Polystyrol-polyisopren-polystyrol und Poly(α-methylstyrol-polybutadiene-poly(α-methylstyrol), als auch Kombinationen davon.

Geeignete nicht-hydrierte Blockcopolymere, die kommerziell erhältlich sind, sind verschiedene Produkte mit dem Markennamen SOLPRENE^{®} (Phillips), KRATON^{®} (Shell), VECTOR^{®} (Dexco) und SEPTON^{®} (Kuraray).

Gemäss einer weiteren bevorzugten Ausführungsform sind die erfindungsgemässen Formmassen dadurch gekennzeichnet, dass die Komponente (C1) ein Polyolefinhomopolymeres oder ein Ethylen-α-Olefin-Copolymeres, insbesondere bevorzugt ein EP- und/oder EPDM-Elastomer (Ethylen-Propylen-Kautschuk respektive Ethylen-Propylen-Dien-Kautschuk), enthält. So kann es sich beispielsweise um ein Elastomer handeln, welches basiert auf einem Ethylen-C3-12-α-Olefin-Copolymer mit 20 bis 96, bevorzugt 25 bis 85 Gew.-% Ethylen, wobei es sich insbesondere bevorzugt bei dem C3-12-α-Olefin um ein Olefin ausgewählt aus der Gruppe Propen, 1-Buten, 1-Penten, 1-Hexen, 1-Octen, 1-Decen und/oder 1-Dodecen handelt, und es sich insbesondere bevorzugt bei der Komponente (C) um einen gepfropften Ethylen-Propylen- oder Ethylen-Butylen-Kautschuk und/oder LLDPE und/oder VLDPE handelt.

Alternativ oder zusätzlich (beispielsweise in Mischung) kann Komponente (C1) ein Terpolymeres auf Basis von Ethylen-C3-12-α-Olefin mit einem unkonjugierten Dien enthalten, wobei dieses bevorzugtermassen 25 bis 85 Gew.-% Ethylen und bis maximal im Bereich von 10 Gew.-% eines unkonjugierten Diens enthält, wobei es sich insbesondere bevorzugt bei dem C3-12-α-Olefin um ein Olefin ausgewählt aus der Gruppe Propen, 1-Buten, 1-Penten, 1-Hexen, 1-Octen, 1-Decen und/oder 1-Dodecen handelt, und/oder wobei das unkonjugierte Dien bevorzugt ausgewählt ist aus der Gruppe Bicyclo(2.2.1)heptadien, Hexadien-1.4, Dicyclopentadien und/oder insbesondere 5-Ethylidennorbornen.

In Frage als Bestandteil für die Komponente (C1) kommen zudem auch Ethylen-Acrylat-Copolymere, die wenigstens ein weiteres Monomer (M) als Comonomer enthalten.

Weitere mögliche Formen als Bestandteile für die Komponente (C1) sind Ethylen-Propylen-Copolymere und Ethylen-Butylen-Copolymere beziehungsweise Mischungen (Blends), welche derartige Systeme enthalten, wobei derartige Systeme mit wenigstens einem Monomer (M) modifiziert (Pfropfung, Copolymerisation) sind.

Alle oben beschriebenen Copolymere (C) können über die genannten Bestandteile hinaus zusätzlich über Bestandteile mit Dicarbonsäureanhydrid-, Dicarbonsäure- oder Dicarbonsäuremonoalkylester-Gruppen in einer Konzentration, die für eine gute Anbindung an das Polyamid (A) und an das Polyamid (B) ausreicht, enthalten.

Die Monomere (M) mit Dicarbonsäureanhydrid-, Dicarbonsäure- oder Carbonsäure-Gruppen werden entweder in einer Pfropfreaktion an das Hauptkettenpolymer (Polyolefin, vinylaromatisches Blockcopolymer) gepfropft, wobei weitere Monomere bei der Pfropfreaktion zugegen sein können, oder durch Copolymerisation von einem ungesättigten Dicarbonsäureanhydrid, einer ungesättigten Dicarbonsäure oder einem ungesättigten Dicarbonsäuremonoalkylester mit anderen Monomeren, wie sie oben genannt wurden, in Komponente (C) eingebracht, wobei die Monomere (M) ausgewählt aus der folgenden Gruppe bevorzugtermassen eingesetzt werden: Maleinsäure, Maleinsäureanhydrid, Maleinsäuremonobutylester, Fumarsäure, Aconitsäure und/oder Itaconsäureanhydrid.

Vorzugsweise ist Komponente (C) mit 0.1 bis 5 Gew.-% eines ungesättigten Anhydrids gepfropft. Generell ist der Pfropfgrad bevorzugtermassen in einem Bereich von 0.1-5%, insbesondere bevorzugt in einem Bereich von 0.2-4%.

Auch möglich als Bestandteil der Komponente (C) ist eine Mischung aus einem Ethylen-Propylen-Copolymer und einem Ethylen-Butylen-Copolymer, dies bevorzugt mit einem Maleinsäureanhydrid-Pfropfgrad (MAH-Propfgrad) im Bereich von 0.3-0.9%.

Die oben angegebenen möglichen Systeme für die Komponente (C) können auch in Mischungen verwendet werden.

Beispiele für kommerziell erhältliche Polyolefine (C1), welche im Rahmen der Bestandteile der Komponente (C) eingesetzt werden können, sind:
- TAFMER MC201: g-MAH (0.6 %) Blend aus 67% EP Copolymer (20 Mol-% Propylen) + 33 % EB Copolymer (15mol-% Buten-1)): Mitsui Chemicals, Japan.
- TAFMER MH5010: g-MAH (0.6 %) Ethylen-Butylen-Copolymer; Mitsui.
- TAFMER MH7010: g-MAH (0.7 %) Ethylen-Butylen-Copolymer; Mitsui.
- TAFMER MH7020: g-MAH (0.7 %) EP-Copolymer, Mitsui.
- EXXELOR VA1801: g-MAH (0.7 %) EP-Copolymer; Exxon Mobile Chemical, US.
- EXXELOR VA1803: g-MAH (0.5-0.9 %) EP Copolymer, amorph,, Exxon.
- EXXELOR VA1810: g-MAH (0.5 %) EP-Copolymer, Exxon
- EXXELOR MDEX 94-11: g-MAH (0.7 %) EPDM, Exxon.
- FUSABOND MN493D: g-MAH (0.5 %) Ethylen-Octen-Copolymer, DuPont, US. FUSABOND A EB560D (g-MAH) Ethylen-n-butyl-acrylat-copolymer, DuPont. ELVALOY, DuPont.

Bevorzugt wird auch ein Ionomer, in welchem die polymergebundenen Carboxylgruppen ganz oder teilweise durch Metallionen miteinander verbunden sind.

Besonders bevorzugt sind durch Pfropfen mit Maleinsäureanhydrid funktionalisierte Mischpolymerisate des Butadiens mit Styrol, unpolare oder polare Olefinhomo- und Copolymere, die durch Pfropfen mit Maleinsäureanhydrid entstanden sind und carbonsäurefunktionalisierte Copolymere wie Poly(ethen-co-(meth)arylsäure) oder Poly(ethen-co-1-olefin-co-(meth)acrylsäure), in denen die Säuregruppen teilweise mit Metallionen neutralisiert sind.

Bevorzugtermassen liegt dabei bei Komponente (C1) der Anteil an C2-C12 Alkenen, in verzweigter oder unverzweigter Form, oder einer Mischung davon, vorzugsweise der Anteil an Ethylen, Propylen, Butylen, oder einer Mischung davon, (als Summe betrachtet bei Mischung) im Bereich von 50-95 Gew.-%, vorzugsweise im Bereich von 60 bis 94 Gew.-%, und besonders bevorzugt im Bereich von 65 - 93 Gew.%, oder 70 bis 93 Gew.-%, wobei insbesondere vorzugsweise nur Ethylen vorliegt.

### Komponente (D)

Die optional bis zu einer Menge von 5 Gew.-%, bezogen auf die Summe der Komponenten (A) - (D), in der Polyamid-Formmasse enthaltene Komponente (D) ist bevorzugt ausgewählt aus der folgenden Gruppe: UV-Stabilisatoren, Hitzestabilisatoren, Radikalfänger, Antioxidantien, Verarbeitungshilfsstoffe, Einschlussverhinderer, Gleitmittel, Entformungshilfsstoffe, Weichmacher, Antistatika, Füllstoffe wie insbesondere partikuläre Füllstoffe einschliesslich nanoskalige Füll- und/oder Zuschlagsstoffe, Flammschutzmittel, insbesondere halogenfreie Flammschutzmittel, Farbstoffe, Pigmente, Residuen aus Polymerisationsverfahren wie Katalysatoren, Salze und deren Derivate oder Mischungen davon.

Bevorzugtermassen enthält die Polyamid-Formmasse zur Beschichtung des Metallelements kein Flammschutzmittel auf Basis von rotem Phosphor oder Magnesiumhydroxid. Bevorzugte Phosphor-haltige Flammschutzmittel sind Metallphosphinate, insbesondere Calcium-, Aluminium- oder Zinkphosphinate, die gegebenenfalls in Kombination mit Synergisten, wie z.B. Melamincyanurat, Melaminpolyphosphat oder Zinkborat eingesetzt werden können.

Weiterhin ist bevorzugt wenn der der Anteil der Komponente (A) im Bereich von 48 bis 83 Gewichtsprozent, vorzugsweise im Bereich von 53 bis 81 Gewichtsprozent liegt und/oder der Anteil der Komponente (B) im Bereich von 9 bis 32 Gewichtsprozent, vorzugsweise im Bereich von 10 bis 30 Gewichtsprozent liegt und/oder dass der Anteil der Komponente (C) im Bereich von 8 bis 17 Gewichtsprozent, vorzugsweise im Bereich von 9 bis 15 Gewichtsprozent liegt und/oder dass der Anteil der Komponente (D) im Bereich von 0 bis 3 Gewichtsprozent, vorzugsweise im Bereich von 0 bis 2 Gewichtsprozent liegt.

Besonders bevorzugt wird eine Polyamid-Formmasse, welche aus den Komponenten (A), (B) und (C), sowie gegebenenfalls (D) besteht:
(A) 48 - 83 Gew.-% mindestens eines teilkristallinen Polyamids ausgewählt aus der Gruppe der Homopolyamide PA46, PA66, PA610, PA612;
(B) 9 - 32 Gew.-% mindestens eines amorphen Polyamids auf Basis aliphatischer Diamine mit 6 bis 24 Kohlenstoffatomen und aliphatischer und/oder aromatischer Dicarbonsäuren mit 6 bis 36 C-Atomen sowie gegebenenfalls Lactame und/oder α,ω-Aminocarbonsäuren;
(C) 8 - 17 Gew.-% mindestens eines, Polyolefins (C1) auf Basis von C2-C12-AI-kenen und/oder mindestens eines Blockcopolymeren (C2) auf Basis von vinylaromatischen Monomeren und C2-C5 Alkenen, oder einer Mischung davon, wobei die genannten Alkene in verzweigter oder unverzweigter Form vorliegen können, und
   wobei die vinylaromatischen Blockcopolymere (C2) und/oder die Polyolefine (C1) wenigstens ein zusätzliches Monomer (M) ausgewählt aus der Gruppe bestehend aus Maleinsäureanhydrid, Itaconsäureanhydrid, Glycidylacrylat, Glycidylmethacrylat, Acrylsäure, Methacrylsäure, Vinylacetat, C1-C12-Alkylacrylate, vorzugsweise Ethylacrylat oder Butylacrylat, C1-C12-Alkylmethacrylate, oder einer Mischung derartiger Monomere, enthalten und
   wobei diese zusätzlichen Monomere (M) in der Polymerkette angeordnet oder auf die Polymerkette aufgepfropft vorliegen können;
(D) 0 - 3 Gew.-% Additive, verschieden von den Komponenten (A) bis (C),
   mit der Maßgabe, dass die Summe der Komponenten (A)-(D) 100 Gew.-% ergibt.

Gemäss einer weiteren bevorzugten Ausführungsform ist das Metallelement der Schichtstruktur aus einem Metall ausgewählt aus der folgenden Gruppe: Aluminium, Kupfer, Silber, Zink, Eisen, Stahl, oder Mischungen respektive Legierungen davon. Die Oberfläche kann dabei aktiv oder passiv oxidiert und/oder galvanisiert sein.

Gemäss einem weiteren Aspekt betrifft die vorliegende Erfindung eine Schichtstruktur (1) mit wenigstens einem Metallelement (2) und wenigstens einer Polyamidschicht (3) gebildet aus einer wie im Voranstehenden beschriebenen erfindungsgemässen Polyamid-Formmasse.

Besonders bevorzugt wird das Metallelement von der Polyamidschicht eingeschlossen. Das Metallelement kann beispielsweise als (endloser) Metallleiter ausgebildet sein, die Polyamid-Formmasse ummantelt dabei das Metallelement. Insbesondere bevorzugt ist hierbei die Polyamid-Formmasse direkt mit dem Metallelement in Kontakt, allerdings kann es ebenso vorteilhaft sein, wenn zwischen Metallelement und Polyamidschicht eine - wie im Nachfolgenden im Detail beschrieben - weitere Schicht (4) angeordnet ist. Befindet sich die weitere Schicht (4) zwischen Metallelement und Polyamidschicht wird sie auch als Zwischenschicht bezeichnet.

Vorzugsweise ist die Polyamidschicht unmittelbar angrenzend und ohne zusätzliche haftvermittelnde Schicht (Zwischenschicht) auf dem Metallelement anliegend ausgebildet. Direkt anliegend schliesst auch Situationen ein, bei welchen das Metallelement an der Oberfläche eine Oxidschicht aufweist, wie auch Situationen, bei welchen das Metallelement ohne Oxidschicht direkt an die Polyamidschicht grenzt.

Gemäss einer weiteren bevorzugten Ausführungsform der vorliegenden Erfindung handelt es sich beim Metallelement um ein Metallprofil, insbesondere ein endloses Metallprofil, vorzugsweise in Form eines Drahtes oder Flachleiters, der vorzugsweise über den ganzen Umfang von der Polyamidschicht aussenseitig abgedeckt ist. Der Leiter kann dabei auch ein Hohlleiter sein.

Insbesondere bevorzugter Massen handelt es sich bei einem solchen Leiter um einen elektrischen Leiter, bei welchem vorzugsweise die Dicke der Polyamidschicht, gemessen senkrecht zur Hauptverlaufsrichtung des Leiters, im Bereich von 0.1-2 mm, vorzugsweise im Bereich von 0.25- 1.25mm und besonders bevorzugt im Bereich von 0.3 bis 1 mm liegt. Die Ader eines solchen Leiters verfügt typischerweise, im Fall eines zylindrischen Drahtes, über einen Durchmesser im Bereich von 0.2-10 mm vorzugsweise im Bereich von 0.2-4 mm. Im Falle eines Flachleiters verfügt dieser typischerweise über eine Breite im Bereich von 10-30 mm und eine Dicke im Bereich von 2-10 mm.

Bevorzugtermassen handelt es sich bei der Schichtstruktur um eine elektrische Leitung für Kraftfahrzeuge im Hochvoltbereich, respektive betrifft die vorliegende Erfindung die Verwendung einer solchen Schichtstruktur für derartige Zwecke. Dies bedeutet, dass der elektrische Leiter dazu vorgesehen ist respektive verwendet wird, um bei Gleichstrom eine Spannung von höchstens 1500 Volt zu transportieren respektive bei Wechselstrom eine Spannung von höchstens 1000 Volt. Die erfindungsgemässe Schichtstruktur ist aber auch für den Niedervoltbereich bis maximal 60 Volt geeignet. Besonders bevorzugte Anwendungen der Schichtstruktur respektive Ausbildungen der Schichtstruktur sind: Batteriekabel oder Ladekabel für Kraftfahrzeuge, Verkabelung innerhalb eines Kraftfahrzeuges mit Elektroantrieb, Ladeinfrastruktur für Elektrofahrzeuge..

Das Metallelement kann aus einem Metall ausgewählt aus der folgenden Gruppe gebildet sein oder diese umfassen oder beinhalten: Aluminium, Kupfer, Silber, Zink, Eisen, Stahl, oder Mischungen respektive Legierungen davon, wobei die Oberfläche oxidiert und/oder galvanisiert sein kann.

Die Schichtstruktur (1) kann eine der folgenden Aufbauten aufweisen:
- Metallelement (2) / Polyamidschicht (3); oder
- Metallelement (2) / Polyamidschicht (3) / weitere Schicht (4); oder
- Metallelement (2) / weitere Schicht (4) / Polyamidschicht (3); oder
- Metallelement (2) / weitere Schicht (4) / Polyamidschicht (3) / weitere Schicht (4);
wobei die genannte weitere Schicht wenigstens zu 50 Gew.-% aus einer thermoplastischen Formmasse gebildet ist, die von der erfindungsgemässen Polyamid-Formmasse verschieden ist. Enthält die Schichtstruktur (1) zwei weitere Schichten (4), so können diese aus der gleichen oder aus verschiedenen Formmassen gebildet vorliegen.

Zudem betrifft die vorliegende Erfindung ein Verfahren zur Herstellung einer im Voranstehenden beschriebenen Schichtstruktur (1), wobei das Metallelement (2) vorzugsweise in Form eines Endlosprofils, insbesondere in Form eines Drahtes oder Flachleiters, in einem Extrusionsprozess, vorzugsweise um den ganzen Umfang des Metallelements (2) mit der Polyamidschicht (3) beschichtet wird, vorzugsweise indem das von Rolle zugeführte Endlosprofil mit dem Material der Polyamidschicht und der optional weiteren Schichten (4) gemeinsam durch eine Extrusionsdüse geführt wird.

Vorgängig zur Extrusionsbeschichtung wird das Metallelement zu Verbesserung der Haftung zur Polyamidschicht vorzugsweise mit Hilfe von Reinigungsbädern, welche Lösungsmittel und/oder saure oder alkalische wässrige Lösungen enthalten können, gereinigt und entfettet, danach getrocknet und auf eine Temperatur im Bereich von 130 bis 280°C, bevorzugt 150 bis 260°C, insbesondere bevorzugt auf 170 bis 240°C vorgeheizt. Das Erwärmen des Metallelementes erfolgt dabei bevorzugt mit Heissluft, Beflammung oder Mikrowellen (Hochfrequenzvorwärumg).

Es handelt sich entsprechend bevorzugtermassen bei der Polyamidschicht nicht um eine Folie oder einen Schlauch, die respektive der beispielsweise vor der Verbindung mit dem Metallelement separat hergestellt wird und eine selbsttragende Struktur bildet, und anschliessend auf das Metallelement unter Verwendung eines Haftvermittlers oder durch teilweises aufschmelzen, aufweichen oder schrumpfen direkt oder indirekt aufgebracht wird.

Schließlich betrifft die vorliegende Erfindung ebenso die Verwendung einer erfindungsgemäßen Polyamid-Formmasse zur Erzeugung einer Polyamidschicht auf einem Metallelement, insbesondere zur Herstellung eines mit der Polyamidschicht isolierten elektrischen Leiters.

Die Polyamidschicht kann dabei unmittelbar oder mittelbar (d.h. getrennt durch eine weitere Schicht, wie oben beschrieben) auf dem Metallelement angeordnet werden.

Die weiteren Spezifikationen der Komponenten (A)-(D), wie sie oben im Zusammenhang mit der Mehrschichtstruktur dargestellt sind, gelten gleichermassen und analog auch für die von der Erfindung umfasste Verwendung. Auch hier geht es bevorzugtermassen nicht darum, dass in einem ersten Schritt die Polyamidschicht als selbsttragende Folie oder als selbsttragender Schlauch hergestellt und anschliessend mit dem Metallelement verbunden wird. Es handelt sich also bevorzugtermassen nicht darum, die Polyamidschicht als Folie oder Schlauch zu verwenden, sondern es geht darum, die Polyamid-Formmasse direkt aus der schmelzflüssigen Phase auf das Metallelement aufzubringen (Extrusion, Tauchbad, etc.), oder alternativ geht es darum, die Polyamid-Formmasse als Festkörper (Pulver, Granulat) auf dem Metallelement anzuordnen und anschliessend auf diesem direkt zur Polyamidschicht umzuwandeln. Es geht also bevorzugtermassen um Verwendungen, bei welchen die Polyamidschicht in situ auf dem Metallelement erzeugt wird, was dann wiederum eine optimale Haftung gewährleistet und dies bevorzugt ohne die Verwendung eines Haftvermittlers oder einer haftvermittelnden Zwischenschicht.

Die vorliegende Erfindung wird anhand der nachfolgenden Ausführungen und Beispiele näher erläutert, ohne die Erfindung auf die spezifischen Ausführungen zu beschränken.

### Herstellung der Polyamid-Formmassen:

Die Komponente des Typs (A) wurde mit der Komponente (B), der Komponenten (C) und den Additiven der Komponente (D) in den in den folgenden Tabellen angegebenen Proportionen nach folgendem Verfahren compoundiert. Hierbei wurden verwendet:

### Komponente A

- P-1: Radipol A45, Polyamid PA66, rel. Viskosität = 1.86, Tm = 260 °C, Radici
- P-2: Grilamid 2S, Polyamid PA610, rel. Viskosität = 1.95, Tm = 222 °C, EMS CHEMIE
- P-3: Grilamid 2D, Polyamid PA612, rel. Viskosität = 1.80, Tm = 212 °C, EMS CHEMIE
- P-4: Grilamid 1S, Polyamid PA1010, rel. Viskosität = 1.75, Tm = 200 °C, EMS CHEMIE

### Komponente B

- P-5: PA 6I/6T/ MACMI/MACMT/PACMI/PACMT/12 (39:39:7:7:2.5:2.5:3), rel. Viskosität = 1.61, Tg = 160 °C, EMS CHEMIE
- P-6: PA 6I/6T (67:33), rel. Viskosität = 1.54, Tg = 125 °C, EMS CHEMIE
- P-7: PA MACM10, rel. Viskosität = 1.72, Tg = 160 °C, EMS CHEMIE
- P-8: PA MACM10/1010 (66:34), rel. Viskosität = 1.77, Tg = 118 °C, EMS CHEMIE
- P-9: MACMI/MACMT/MACM12/MACM36 (28:28:40:4), rel. Viskosität = 1.62, Tg = 200 °C, EMS CHEMIE
- P-10: MACM12, rel. Viskosität = 1.84, Tg = 154 °C, EMS CHEMIE

### Komponente C

- P-11: Lotader AX8840, Copolymer aus Ethylen (92%) und Glycidylmethacrylat (8%), Arkema
- P-12: Kraton FG1901GT, Styrolblockcopolymer SEBS-g-MAH (30% Styrol, 70% EB, 1.7% Maleinsäureanhydrid (bezogen auf SEBS)), Kraton Polymers

### Komponente D

Add Mischung (1:1) aus Irganox 1098, BASF und Naugard 445, SI Group

Die Rohstoffe der Komponenten (A), (B), (C) und (D) wurden vorgemischt und gravimetrisch über eine Bandwaage in den Einzug eines Zweiwellenextruders der Fa. Werner u. Pfleiderer, Typ ZSK 25 dosiert. Zwei Zonen vor der Düse wurde die Schmelze bei Atmosphärendruck entgast (geöffnete Entgasungszone). Es wurde bei Zylindertemperaturen von 250 - 290 °C, bei einer Schneckendrehzahl von 200 U/min und einem Durchsatz von 12 kg/h gearbeitet. Der Compound wurde über eine Düse ausgetragen und nach Abkühlen des Strangs granuliert. Anschliessend wurde bei 80 °C 24 h im Vakuum getrocknet.

### Herstellung der Formkörper:

Die Herstellung der Formkörper erfolgte auf einer Spritzgussmaschine Arburg Allrounder 320-210-750 mit ansteigendem Zylindertemperaturprofil 240 - 290 °C und Einspritzdrücken von 1200 - 1800 bar. Die Formtemperatur betrug 80 °C. Die Geometrie der Formkörper entspricht den Vorgaben der entsprechenden Prüfnormen.

Die **Messungen** wurden nach folgenden Normen und an folgenden Prüfkörpern durchgeführt.

Der **MVR** (Schmelze-Volumenfliessrate oder **M**elt **V**olume-flow **R**ate) wird nach ISO 1133:2012 mittels eines Kapillarrheometers ermittelt, wobei das Material (Granulat) in einem beheizbaren Zylinder bei einer Temperatur von 275 °C aufgeschmolzen und unter einem durch die Auflagelast von 5 kg entstehenden Druck durch eine definierte Düse (Kapillare) gedrückt wird. Ermittelt wird das austretende Volumen der Polymerschmelze als Funktion der Zeit.

Das **thermische Verhalten** (Schmelzpunkt (TM), Schmelzenthalpie (ΔHm), Glasumwandlungstemperatur (Tg)) wurde anhand der ISO-Norm 11357:2013 (11357-2 für die Glasübergangstemperatur, 11357-3 für die Schmelztemperatur und die Schmelzenthalpie) am Granulat bestimmt. Die Differential Scanning Calorimetry (DSC) wurde mit Aufheizrate von 20 °C/min durchgeführt.

Die **relative Viskosität** (ηrel) wurde bestimmt nach DIN EN ISO 307:2007 an Lösungen von 0.5 g Polymer gelöst in 100 ml m-Kresol bei einer Temperatur von 20 °C. Als Probe wird Granulat verwendet.Der **MVR** (Melt volume-flow rate) wird nach ISO 1133 bei 275°C und einer Belastung von 5 kg am Granulat bestimmt.

**Zug-E-Modul, Bruchfestigkeit und Bruchdehnung:** Zug-E-Modul, Bruchfestigkeit und Bruchdehnung wurden nach ISO 527:2012 mit einer Zuggeschwindigkeit von 1mm/min (Zug-E-Modul) bzw. mit einer Zuggeschwindigkeit von 50 mm/min (Bruchfestigkeit, Bruchdehnung) am ISO-Zugstab, Norm ISO/CD 3167, Typ Al, 170 x 20/10 x 4mm bei Temperatur 23 °C bestimmt.

**Schlagzähigkeit, Kerbschlagzähigkeit** nach Charpy wurden nach ISO 179/1 (2023) bzw. ISO 179/2 (2020) am ISO-Prüfstab, Norm ISO/CD 3167, Typ B1, 80 x 10 x 4 mm bei einer Temperatur von 23 °C und -30 °C gemessen.

Der **spezifische Durchgangswiderstand** wird gemäß DIN EN 62631-3-1 (2017) anhand von Prüfkörper mit der Dimension 100 x 100 x 3 mm bestimmt. Die angegebenen Werte entsprechen dem Mittelwert von Messungen an je 3 Prüfkörpern. Die Messungen werden mittels einer Hochohm-Messelektrode FE 50 und eine Messgeräte TO3 von H.P. Fischer Elektronik GmbH & Co. durchgeführt. Um den spezifischen Durchgangswiderstand bei verschiedenen Temperaturen bestimmen zu können, befindet sich die Messelektrode in einem Wärmeschrank. Nach Aufheizen auf die vorgesehene Messtemperatur wird der Prüfkörper vorgängig zur Messung für 20 min bei dieser Temperatur gelagert. Zusätzlich wurden die Prüfkörper in einem Wärmeschrank bei 180 °C für die Dauer von 3000 Stunden gelagert und nachgängig der spezifische Durchgangswiderstand bei 20 °C und 180 °C bestimmt.

Die **chemische Beständigkeit** gegenüber einer Mischung aus 85% Ethanol und 15% ISO 1817 Liquid C (50 Vol-% 2,2,4-Trimethylpentan, 50 Vol-% Toluol) sowie gegenüber einem Servolenkungsöl (ISO 1817, Oil No. 3) wurde gemäss ISO 6722-1 Class C Methode 1 und 2 an einem ummantelten Aluminiumdraht mit 4 mm Durchmesser, einer Ummantelung von 0.5 mm (Aussendurchmesser: 5 mm) und einer Länge von 600 mm durchgeführt. Methode 1: Nach der Lagerung der Prüflinge in der Testflüssigkeit (10 Sekunden) bei Raumtemperatur (Ethanol-Liquid C Mischung) oder 50 °C (Servolenkungsöl) und einem anschliessenden Abtropfen (3 Minuten) werden die Prüflinge für 240 h bei 125 °C gelagert. Nach Abkühlen wird der so behandelte Aluminiumdraht über mehrere Wicklungen auf einen 10 mm Dorn (Radius: 5 mm) gebogen. Die Ummantelung wird anschliessend einer optischen Kontrolle hinsichtlich Rissbildung oder sonstigen Veränderungen unterzogen. Anschliessend wird der aufgewickelte Draht einem Spannungsfestigkeitstest (1 kV, 1 Minute) unterzogen, nachdem er für 10 Minuten in einer Salzlösung (1% Natriumchlorid) gelagert wurde. Methode 2: Die Lagerung der Prüflinge erfolgte in der Testflüssigkeit für 20 h bei 23 °C (Ethanol, Liquid C) oderfür 20 h bei 50 °C (Servolenkungsöl). Nach Trocknen (30 Minuten Abtropfen) der Prüflinge bei 23 °C erfolgte der Biegetest und danach die Prüfung der Spannungsfestigkeitstest (1 kV, 1 Minute), wie bei Methode 1 beschrieben.

Herstellung eines ummantelten Aluminiumdrahtes für die Bestimmung der chemischen Beständigkeit: Ein kompakter Aluminiumdraht mit 4,0 mm Durchmesser aus Reinaluminium (Al 99,5) wurde vorgängig zur Ummantelung entfettet und getrocknet. Anschliessend wurde der Aluminiumleiter durch Beflammung auf 200 °C erwärmt und mit den Polyamid-Varianten auf einer Drahtummantelungsanlage (Nokia Cable Machinery SCL - 20 Anlage mit folgender Ausstattung: MPP30-24D-305 Extruder mit Schneckendurchmesser von 30 mm und Schneckenkänge L/D 25:1; Extrusionskopf: Nokia Cable Machinery Querspritzkopf NXH 3, Düsendurchmesser 10,0 mm, Kerndurchmesser 6,0 mm; Kühlbad Wassertemperatur 30°C, Abstand Düse zu Kühlbad 85 cm; Leitervorwärmung durch Beflammung mit Ringflammdüse, Propan-Sauerstoffbrenner) mit einer Schichtstärke von 0,5 mm extrusionsbeschichtet. Die Abzugsgeschwindigkeit betrug dabei 5 m/min, die Düsentemperatur 270 °C und die Extrusionszonen waren auf eine Temperatur von 240 bis 270 °C eingestellt.

Die hergestellten Prüfkörper aus den Komponenten (A) bis (D) wurden gemäß den nachfolgenden Tabellen compoundiert und entsprechend der oben beschriebenen Versuchsmethodik hinsichtlich ihrer chemischen Beständigkeit untersucht. Die Mengen der jeweiligen Komponenten sowie die erhaltenen Messergebnisse sind in den nachfolgenden Tabellen 1 und 2 wiedergegeben.

**Tabelle 1**

| **Komponenten** | **Einheit** | **VB1** | **B1** | **B2** | **B3** | **B4** | **B5** | **VB2** |
|---|---|---|---|---|---|---|---|---|
| P-1 (Komponente A) | Gew.-% | | 67 | 57 | 67 | 57 | 67 | 75 |
| P-10 (Komponente B) | Gew.-% | 87.6 | | | | | | |
| P-5 (Komponente B) | Gew.-% | | | | 20 | 30 | 20 | 24 |
| P-6 (Komponente B) | Gew.-% | | 20 | 30 | | | | |
| P-11 (Komponente C) | Gew.-% | 12.4 | 12 | 12 | 12 | 12 | | |
| P-12 (Komponente C) | Gew.-% | | | | | | 12 | |
| Add (Komponente D) | Gew.-% | | 1.0 | 1.0 | 1.0 | 1.0 | 1.0 | 1.0 |

| Eigenschaften | | | | | | | | |
|---|---|---|---|---|---|---|---|---|
| MVR (275°C/5kg) | cm³ / 10 min | 18 | 70 | 58 | 45 | 32 | 49 | 56 |
| Zug-E-Modul | MPa | 1300 | 2300 | 2220 | 2300 | 2200 | 2300 | 2820 |
| Bruchfestigkeit | MPa | 45 | 45 | 42 | 47 | 44 | 48 | 54 |
| Bruchdehnung | % | 120 | 20 | 17 | 17 | 13 | 12 | 44 |
| Schlagzähigkeit 23°C | kJ/m² | o.B. | o.B. | o.B. | o.B. | o.B. | o.B. | o.B. |
| Schlagzähigkeit -30°C | kJ/m² | | o.B. | o.B. | o.B. | o.B. | o.B. | 62 |
| Kerbschlagzähigkeit 23°C | kJ/m² | 56 | 15.4 | 15.8 | 14 | 16 | 19 | 5.4 |
| Kerbschlagzähigkeit -30°C | kJ/m² | | 8.9 | 10.0 | 9 | 10 | 13 | 3.8 |
| spezifischer Durchgangswiderstand 23°C (DIN EN 62631-3-1) | Ωm | 2.2E15 | 2.3E15 | 6.3 E 14 | 9.3 E 14 | 4.8E14 | 1.2E15 | 1.5E15 |
| spezifischer Durchgangswiderstand 130°C | Ωm | 6.2E11 | 1.1E13 | 1.7E13 | 1.5E13 | 3.5E13 | 1.7E13 | 1.0E13 |
| spezifischer Durchgangswiderstand 180°C | Ωm | n.m. | 8.7E12 | 1.1E13 | 1.2 E13 | 2.9E13 | 3.4E12 | 2.5E10 |
| spezifischer Durchgangswiderstand 20°C, nach Lagerung 3000 h, 180 °C | Ωm | n.m. | 6.4E13 | 7.7E13 | 1.9E11 | 1.4E14 | 5.6E13 | 3.7E13 |
| spezifischer Durchgangswiderstand 180°C, nach Lagerung 3000 h, 180 °C | Ωm | n.m. | 5.8E10 | 2.1E11 | 1.9E11 | 1.2E13 | 1.6E11 | 1.1E10 |
| Chem. Beständigkeit gemäss ISO6722-1 Class C Methode 2 (20h, 23°C) (Ethanol/ISO1817 Liquid C) | | n. best. | best. | best. | best. | best. | best. | n. best. |
| Chem. Beständigkeit gemäss ISO6722-1 Class C Methode 1 (240h, 125°C) (Ethanol/ISO1817 Liquid C) | | n .best. | best. | best. | best. | best. | best. | n .best. |
| Chem. Beständigkeit gemäss ISO6722-1 Class C Methode 2 (20h, 23°C) (Servolenkungsöl) | | n .best. | best. | best. | best. | best. | best. | n .best. |
| Chem. Beständigkeit gemäss ISO6722-1 Class C Methode 1 (240h, 125°C) (Servolenkungsöl) | | n .best. | best. | best. | best. | best. | best. | n .best. |

| | | | | | | | | |
|---|---|---|---|---|---|---|---|---|
| best. =Test bestanden; n. best. =Test nicht bestanden n.m. = nicht messbar (Probe hat keine ausreichende mechanische Festigkeit) | | | | | | | | |

**Tabelle 2**

| **Komponenten** | **Einheit** | **B6** | **B7** | **B8** | **B9** | **B10** | **B11** | **B12** |
|---|---|---|---|---|---|---|---|---|
| P-1 (Komponente A) | Gew.-% | 76 | | | | | | |
| P-2 (Komponente A) | Gew.-% | | 67 | | 67 | | 67 | |
| P-3 (Komponente A) | Gew.-% | | | | | 67 | | 67 |
| P-4 (Komponente A) | Gew.-% | | | 67 | | | | |
| P-5 (Komponente B) | Gew.-% | 11 | | | 20 | 20 | | |
| P-6 (Komponente B) | Gew.-% | | | | | | | |
| P-7 (Komponente B) | Gew.-% | | | | | | 20 | |
| P-8 (Komponente B) | Gew.-% | | 20 | 20 | | | | |
| P-9 (Komponente B) | Gew.-% | | | | | | | 20 |
| P-11 (Komponente C) | Gew.-% | 12 | 12 | 12 | 12 | 12 | 12 | 12 |
| P-12 (Komponente C) | Gew.-% | | | | | | | |
| Add (Komponente D) | Gew.-% | 1.0 | 1.0 | 1.0 | 1.0 | 1.0 | 1.0 | 1.0 |

| Eigenschaften | | | | | | | | |
|---|---|---|---|---|---|---|---|---|
| MVR (275°C/5kg) | cm³ / 10 min | 62 | 24 | 51 | 36 | 88 | 24 | 42 |
| Zug-E-Modul | MPa | 2420 | 1780 | 1490 | 1800 | 2000 | 1790 | 1750 |
| Bruchfestigkeit | MPa | 48 | 44 | 51 | 49 | 41 | 44 | 49 |
| Bruchdehnung | % | 15.6 | 150 | 240 | 210 | 90 | 100 | 80 |
| Schlagzähigkeit 23°C | kJ/m² | o.B. | o.B. | o.B. | o.B. | o.B. | o.B. | o.B. |
| Schlagzähigkeit -30°C | kJ/m² | o.B. | o.B. | o.B. | o.B. | o.B. | o.B. | o.B. |
| Kerbschlagzähigkeit 23°C | kJ/m² | 11.1 | 13.0 | 12.3 | 14.2 | 11.8 | 13.8 | 16.6 |
| Kerbschlagzähigkeit -30°C | kJ/m² | 9.0 | 8.5 | 8.0 | 13.7 | 8.4 | 8.8 | 9.8 |
| spezifischer Durchgangswiderstand 23°C (DIN EN 62631-3-1) | Ωm | 1.3E15 | 3.3E15 | 2.7E15 | 9.8E14 | 7.9E14 | 2.0E15 | 1.3E15 |
| spezifischer Durchgangswiderstand 130°C | Ωm | 2.3E13 | 1.8E13 | 2.7E13 | 1.6E13 | 3.1E13 | 2.8E13 | 1.7E14 |
| spezifischer Durchgangswiderstand 180°C | Ωm | 1.4E13 | 1.3E13 | 2.4E13 | 1.4E13 | 1.9E13 | 1.7E13 | 1.4E13 |
| spezifischer Durchgangswiderstand 20°C, nach Lagerung 3000 h, 180 °C | Ωm | 1.2E14 | 2.0E14 | 1.7E14 | 1.3E14 | 1.8E14 | 2.2 E 14 | 2.8E14 |
| spezifischer Durchgangswiderstand 180°C, nach Lagerung 3000 h, 180 °C | Ωm | 3.4E11 | 4.5E11 | 2.1E11 | 1.9E11 | 7.6E11 | 5.2 E 11 | 6.4E11 |
| Chem. Beständigkeit gemäss ISO6722-1 Class C Methode 2 (20h, 23°C) (Ethanol/ISO1817 Liquid C) | | best. | best. | best. | best. | best. | best. | best. |
| Chem. Beständigkeit gemäss ISO6722-1 Class C Methode 1 (240h, 125°C) (Ethanol/ISO1817 Liquid C) | | best. | best. | best. | best. | best. | best. | best. |

Wie aus den Versuchsergebnissen ersichtlich ist, kann eine hinreichende chemische und thermische Beständigkeit nur dann erzielt werden, wenn die Komponenten (A) bis (D) in den genannten Gewichtsverhältnissen gemeinsam vorliegen.

## Patentansprüche

1. Polyamid-Formmasse, wobei die Polyamid-Formmasse folgenden Komponenten (A), (B) und (C), sowie gegebenenfalls (D) umfasst oder hieraus besteht:
(A) 40 - 85 Gew.-% mindestens eines teilkristallinen Polyamids ausgewählt aus der Gruppe der Homopolyamide PA46, PA66, PA610, PA612, PA1010, PA1012 sowie der Copolyamide PA 66/6T und PA 66/6I/6T;
(B) 8 - 35 Gew.-% mindestens eines amorphen Polyamids auf Basis aliphatischer Diamine mit 6 bis 24 Kohlenstoffatomen und aliphatischer und/oder aromatischer Dicarbonsäuren mit 8 bis 12 C-Atomen sowie gegebenenfalls Lactame und/oder α,ω-Aminocarbonsäuren;
(C) 7 - 20 Gew.-% mindestens eines, Polyolefins (C1) auf Basis von C2-C12-Alkenen und/oder mindestens eines Blockcopolymeren (C2) auf Basis von vinylaromatischen Monomeren und C2-C5 Alkenen, oder einer Mischung davon, wobei die genannten Alkene in verzweigter oder unverzweigter Form vorliegen können, und
wobei die Polyolefine (C1) und/oder vinylaromatischen Blockcopolymere (C2) wenigstens ein zusätzliches Monomer (M) ausgewählt aus der Gruppe bestehend aus Maleinsäureanhydrid, Itaconsäureanhydrid, Glycidylacrylat, Glycidylmethacrylat, Acrylsäure, Methacrylsäure, Vinylacetat, C1-C12-Alkylacrylate, vorzugsweise Ethylacrylat oder Butylacrylat, C1-C12-Alkylmethacrylate, oder einer Mischung derartiger Monomere, enthalten und
wobei diese zusätzlichen Monomere (M) in der Polymerkette angeordnet oder auf die Polymerkette aufgepfropft vorliegen können;
(D) 0 - 5 Gew.-% Additive, verschieden von den Komponenten (A) bis (C),
mit der Maßgabe, dass die Summe der Komponenten (A)-(D) 100 Gew.-% ergibt.

2. Polyamid-Formmasse nach Anspruch 1, **dadurch gekennzeichnet, dass**
Polyamid (A) ausgewählt ist als PA66, PA610, PA612;
und/oder
Polyamid (B) ausgewählt ist als PA 6I/6T, PA MACM10, PA MACM12, PA MACM14, PA MACM10/1010, PA MACM12/1012, PA MACM14/1014, PA MACMI/12, PA MACMI/MACM12, PA MACMI/MACMT/MACM12, PA MACMI/MACMT/12, PA MACMI/MACMT/MACM12/MACM36, PA 6I/6T/MACMI/MACMT/PACMI/PACMT/12, PA 6I/6T/612/MACMI/MACMT/MACM12.

3. Polyamid-Formmasse nach einem der vorhergehenden Ansprüche, **dadurch gekennzeichnet, dass** das mindestens eine Polyolefin (C1) ein Polyolefin auf Basis von C2 - C8, bevorzugt C2 - C5 Alkenen, insbesondere Ethen, Propen oder 1-Buten ist sowie Mischungen oder Kombinationen hiervon.

4. Polyamid-Formmasse nach einem der vorhergehenden Ansprüche, **dadurch gekennzeichnet, dass** beim mindestens einen Polyolefin (C1) der Anteil an C2-C12 Alkenen im Bereich von 50-95 Gew.%, vorzugsweise im Bereich von 60 bis 94 Gew.-%, und besonders bevorzugt im Bereich von 65 - 93 Gew.-%, oder 70 bis 93 Gew.-%, liegt.

5. Polyamid-Formmasse nach einem der vorhergehenden Ansprüche, **dadurch gekennzeichnet, dass**
das mindestens eine Polyolefin (C1) ausschliesslich aufgebaut ist aus C2-C12, bevorzugt C2-C8, besonders bevorzugt C2-C5 Alkenen, in verzweigter oder unverzweigter Form oder einer Mischung davon, und zusätzlich wenigstens einem Monomer (M) ausgewählt aus der Gruppe: Maleinsäureanhydrid, Itaconsäureanhydrid, Glycidylacrylat, Glycidylmethacrylat, Acrylsäure, Methacrylsäure, Vinylacetat, C₁-C₁₂-Alkylacrylate, C₁-C₁₂-Alkylmethacrylate, oder einer Mischung derartiger Monomere, wobei
vorzugsweise das Monomer (M) ausgewählt aus der folgenden Gruppe enthalten ist: Maleinsäureanhydrid, Glycidylacrylat, Glycidylmethacrylat, Acrylsäure, Methacrylsäure, Vinylacetat, C1-C12-Alkylacrylate.

6. Polyamid-Formmasse nach einem der vorhergehenden Ansprüche, **dadurch gekennzeichnet, dass** Komponente (C) ausgewählt ist aus der Gruppe bestehend aus:
- Polyolefine (C1) aus Ethylen und Glycidylmethacrylat, vorzugsweise mit einem Gehalt an Glycidylmethacrylat von 7 bis 14 Gew.-% bezogen auf die Summe aller Monomere im Copolymer;
- Polyolefine (C1) aus Ethylen, Vinylacetat, sowie Glycidylmethacrylat, vorzugsweise 71 - 88 Gew.-% Ethylen, 5 - 15 Gew.-% Vinylacetat und 7 - 14 Gew.-% Glycidylmethacrylat bezogen auf die Summe aller Monomere im Copolymer;
- Polyolefine (C1) aus Ethylen, Methylacrylat, und Glycidylmethacrylat, vorzugsweise 56 - 73 Gew.-% Ethylen, 20 - 30 Gew.-% Methylacrylat und 7 - 14 Gew.-% Glycidylmethacrylat bezogen auf die Summe aller Monomere im Copolymer;
- Polyolefine (C1) aus Ethylen, Butylacrylat, Glycidylmethacrylat, vorzugsweise 51 - 78 Gew.-% Ethylen, 15 - 35 Gew.-% Butylacrylat und 7 - 14 Gew.-% Glycidylmethacrylat bezogen auf die Summe aller Monomere im Copolymer;
- Blockcopolymere (C2) aus 20 bis 60 Gew.-% Styrol, 40 bis 80 Gew.-% Ethylen und Butylen, gepfropft mit 0.5 bis 4 Gew.-% Maleinsäureanhydrid;
- oder eine Mischung aus solchen Polyolefinen (C1) und Blockcopolymeren (C2).

7. Polyamid-Formmasse nach einem der vorhergehenden Ansprüche, **dadurch gekennzeichnet, dass** die Komponente (D) ausgewählt ist aus der folgenden Gruppe: UV-Stabilisatoren, Hitzestabilisatoren, Radikalfänger, Antioxidantien, Verarbeitungshilfsstoffe, Einschlussverhinderer, Gleitmittel, Entformungshilfsstoffe, Weichmacher, Antistatika, Füllstoffe, wie insbesondere partikuläre Füllstoffe einschliesslich nanoskalige Füll- und/oder Zuschlagsstoffe, Flammschutzmittel, insbesondere halogenfreie Flammschutzmittel, Farbstoffe, Pigmente, Residuen aus Polymerisationsverfahren wie Katalysatoren, Salze und deren Derivate oder Mischungen davon.

8. Polyamid-Formmasse nach einem der vorhergehenden Ansprüche, **dadurch gekennzeichnet, dass**
der Anteil der Komponente (A) im Bereich von 48 bis 83 Gewichtsprozent, vorzugsweise im Bereich von 53 bis 81 Gewichtsprozent liegt;
und/oder dass der Anteil der Komponente (B) im Bereich von 9 bis 32 Gewichtsprozent, vorzugsweise im Bereich von 10 bis 30 Gewichtsprozent liegt;
und/oder dass der Anteil der Komponente (C) im Bereich von 8 bis 17 Gewichtsprozent, vorzugsweise im Bereich von 9 bis 15 Gewichtsprozent liegt;
und/oder dass der Anteil der Komponente (D) im Bereich von 0 bis 3 Gewichtsprozent, vorzugsweise im Bereich von 0 bis 2 Gewichtsprozent liegt.

9. Schichtstruktur (1) mit wenigstens einem Metallelement (2) und wenigstens einer Polyamidschicht (3) gebildet aus einer Polyamid-Formmasse nach einem der vorhergehenden Ansprüche.

10. Schichtstruktur (1) nach vorhergehendem Anspruch, **dadurch gekennzeichnet, dass** das Metallelement (2) aus einem Metall ausgewählt aus der folgenden Gruppe besteht: Aluminium, Kupfer, Silber, Zink, Eisen, Stahl, oder Mischungen respektive Legierungen davon, wobei die Oberfläche oxidiert und/oder galvanisiert sein kann.

11. Schichtstruktur (1) nach einem der beiden vorhergehenden Ansprüche, **dadurch gekennzeichnet, dass** die Schichtstruktur eine der folgenden Aufbauten aufweist:
- Metallelement (2) / Polyamidschicht (3); oder
- Metallelement (2) / Polyamidschicht (3) / weitere Schicht (4); oder
- Metallelement (2) / weitere Schicht (4) / Polyamidschicht (3); oder
- Metallelement (2) / weitere Schicht (4) / Polyamidschicht (3) / weitere Schicht (4);
wobei die genannte weitere Schicht (4) wenigstens zu 50 Gew.-% aus einer thermoplastischen Formmasse gebildet ist, die von der Polyamid-Formmasse (3) verschieden ist.

12. Schichtstruktur (1) nach einem der Ansprüche 9 bis 11, **dadurch gekennzeichnet, dass** es sich beim Metallelement (2) um ein Metallprofil handelt, vorzugsweise in Form eines Drahtes oder Flachleiters, der vorzugsweise über den ganzen Umfang von der Polyamidschicht (3) abgedeckt ist, ohne dass eine weitere Schicht (4) zwischen Metallelement (2) und Polyamidschicht (3) angeordnet ist.

13. Schichtstruktur (1) nach vorhergehendem Anspruch, **dadurch gekennzeichnet, dass** es sich um einen elektrischen Leiter handelt, bei welchem die Dicke der Polyamidschicht (3), gemessen senkrecht zur Hauptverlaufsrichtung des Leiters, im Bereich von 0.1-2 mm, vorzugsweise im Bereich von 0.25-1.25, besonders bevorzugt im Bereich von 0.3 bis 1 mm liegt.

14. Verfahren zur Herstellung einer Schichtstruktur nach einem der Ansprüche 9 bis 13, **dadurch gekennzeichnet, dass** das Metallelement (2) vorzugsweise in Form eines Endlosprofils, insbesondere in Form eines Drahtes oder Flachleiters, in einem Extrusionsprozess, vorzugsweise um den ganzen Umfang des Metallelements (2) mit der Polyamidschicht (3) beschichtet wird, vorzugsweise indem das von Rolle zugeführte Endlosprofil mit dem Material der Polyamidschicht (3) gemeinsam durch eine Extrusionsdüse geführt wird.

15. Verwendung einer Polyamid-Formmasse nach einem der Ansprüche 1 bis 7 zur Erzeugung einer Polyamidschicht (3) auf einem Metallelement (2), insbesondere zur Herstellung eines mit der Polyamidschicht (3) isolierten elektrischen Leiters.
